# EUROPEAN PATENT SPECIFICATION

(11) **EP 2 373 718 B1**
(45) Date of publication and mention of the grant of the patent: **13.08.2014**
(21) Application number: 09796419.1
(22) Date of filing: 18.12.2009
(51) Int. Cl.: C08G 18/28, C08G 18/67, C09D 175/16

(54) **GELCOAT COMPOSITION AND ARTICLES COMPRISING THE SAME**
GELCOATZUSAMMENSETZUNG UND ARTIKEL DAMIT
COMPOSITION DU TYPE ENDUIT GÉLIFIÉ ET ARTICLES CONTENANT CETTE COMPOSITION

(30) Priority: 22.12.2008 US 139831 P
(43) Date of publication of application: 12.10.2011
(73) Proprietor: Scott Bader Company Limited, Wellingborough Northamptonshire NN29 7RL (GB)
(72) Inventor: PANTHER, Richard, Austin, Northamptonshire (GB)
(74) Representative: Webster, Jeremy Mark
(86) International application number: PCT/GB2009/002930
(87) International publication number: WO 2010/073003

(56) References cited:
- EP-A1- 0 924 247
- WO-A1-2004/014978
- WO-A1-2008/026580

## Description

The present invention relates generally to gelcoat compositions and reinforced plastic articles made using such compositions. In particular, the present invention is concerned with gelcoats based on resins derived from functionalised isocyanate monomers, the use of these resins and gelcoats in making shaped articles, including gelcoated laminates, and methods of making such resins and articles.

Reinforced plastics and shaped articles made therefrom have been well known for decades. One class of plastics used in the manufacture of such reinforced plastics and shaped articles is the class known as thermosetting plastics. These harden by chemical reaction, often generating heat when they are formed, and cannot be melted or readily re-formed once hardened. A number of different thermosetting resins are known for the manufacture of thermosetting plastics, amongst them being unsaturated polyesters, vinyl esters, urethane methacrylates and urethane acrylates. These various thermosetting resins all consist of one or more oligomers or polymers containing ethylenic unsaturation dissolved in one or more ethylenically unsaturated copolymerisable monomers. The resins are liquids at normal temperatures and pressures, so can be used in the liquid state to impregnate reinforcements, for instance, fibrous reinforcements, especially glass fibres, but, when treated with suitable radical forming initiators, the various unsaturated components of the resin crosslink with each other via a free radical copolymerisation mechanism to produce a hard, thermoset plastic mass.

This chemistry can be used to produce, for example, glass reinforced shaped articles by positioning glass fibre reinforcement in a mould having the shape of the desired article and then impregnating the glass with thermosetting resin into which suitable radical forming initiators have been dispersed. (Note: resin containing such dispersed initiators would be termed "catalysed resin" by those skilled in the art.) In time, the resin hardens (a process commonly referred to as "curing" by those skilled in the art) in the shape of the mould, after which the finished article can be removed from the mould.

The durability of reinforced plastic articles of this type is very dependant on the quality of its exposed surface. Protection of the surface is achieved by providing a resin rich layer, which normally takes the form of a gelcoat. In addition to the resin, they may contain, amongst other things, fillers, pigments, additives to assist the release of trapped air bubbles and additives to help protect against degradation by UV or visible light. The different types of materials that can be incorporated into gelcoats, and the purposes served by these materials, are well known to those skilled in the art. It would be most unusual, however, to include some form of fibrous reinforcement in a gelcoat composition.

When using a gelcoat in the manufacture of shaped articles, it is usual to apply the liquid gelcoat, treated with suitable radical forming initiators (i.e. "catalysed"), to the mould surface first, providing a layer of even thickness (usually ∼0.4 - 0.5mm). Then, when the gelcoat layer has cured sufficiently, the glass fibre reinforcement can be positioned and wetted with the chosen catalysed resin. Depending on whether the mould for the shaped article consists of one piece (the so-called "open mould" process) or two matching halves which fit together (the so-called "closed mould" process), the cured gelcoat will form one or both surfaces of the finished article. The gelcoat improves the aesthetic appearance of the shaped article in addition to providing protection from attack by moisture, UV or visible light, etc.

When using a gelcoat in the manufacture of reinforced shaped articles, it is extremely important to apply the glass and catalysed resin to the curing gelcoat within the correct period of the gelcoat's cure. The process of applying glass and catalysed resin to a gelcoat layer on/in a mould is known within the industry as "backing up". If this backing up is commenced too early, before the gelcoat has cured sufficiently, the resin can attack the gelcoat, causing it to wrinkle. If, on the other hand, backing up is delayed for so long that the gelcoat becomes too fully cured, the bond between the gelcoat layer and the rest of the reinforced article may be too weak. The gelcoat is then vulnerable to becoming detached from the finished article, a fault referred to in the industry as "peeling". A simple test to assess the state of cure of the gelcoat layer is to gently touch the surface with a clean finger. If the surface feels slightly tacky but the finger remains clean, then the gelcoat is ready for backing up. Once the gelcoat has cured to a state at which it no longer feels tacky, however, (the so-called "tack free time"), it is often too fully cured to give the strongest possible bond between the gelcoat and the reinforced layer of the article.

For reasons of production efficiency, it is important that the gelcoat has a backup time (the time after which the curing gelcoat layer is ready to accept catalysed liquid resin) that is not excessively long, such that the construction of the reinforced part of the shaped article can begin fairly soon after application of the gelcoat to the mould surface. A short tack-free time, however, can create difficulties in the production of large articles such as boat hulls, because if the fabricator starts backing up the gelcoat at one end of the large article, by the time he reaches the other end the gelcoat may be too fully cured. It is therefore desirable for the gelcoat to display a relatively short backup time (preferably less than one hour) but a tack-free time of several hours, to give the fabricator time to back up the whole of the gelcoat layer whilst the gelcoat is in the optimum state of cure.

Gelcoats based on unsaturated polyester resins have been known for decades and are readily available from a wide variety of commercial suppliers. More recently, gelcoats based on urethane acrylate or urethane methacrylate resins have been investigated, examples being described in international (PCT) patent application WO-A-2004/014978 (to Garner et al) and Japanese unexamined patent application JP-A-11-021325 (to Aoki et al).

Document EP 0 924 247 A1 is directed to thermosetting resin compositions which may be used as a gel coat (see paragraph [0020]). The example 7 of EP 0 924 247 A1 discloses a composition prepared by mixing hexamethylene diisocyanate, styrene monomer, dibutyl tin dilaurate serving as a catalyst and 4-hydroxy-2,2,6,6-tetramethylpiperidine-1-oxyl. Then, dipropylene glycol is added to let the reaction solution undergo reaction over 3 hours. Then, hydroxypropylmethacrylate is added to the reaction solution, and the reaction solution is let undergo reaction over 5 hours, whereby an urethane(meth)acrylate resin is obtained. It is stated at paragraph [0038] of EP 0 924 247 A1 that *"the urethane(meth)acrylate resin can be obtained by reacting polyisocyanate with a polyhydroxy compound or polyhydric alcohols and then reacting the resulting compound with a (meth)acrylic compound containing a hydroxyl group and optionally an allyl ether compound containing a hydroxyl group".*

Whilst investigating the possibility of preparing gelcoats using unsaturated urethane resins containing acrylate or methacrylate unsaturated groups, the inventors have surprisingly found that gelcoats based on unsaturated urethane resins containing both acrylate and allyl ether functional groups provide the manufacturer of reinforced shaped articles with the desirable combination of a backup time of less than one hour with a longer interval between backup time and tack-free time, compared both with gelcoats based on unsaturated urethane resins containing both methacrylate and allyl ether functional groups and with other gelcoats of the known art.

Accordingly, in a first aspect the present invention provides a thermosetting gel coat resin comprising a polymerisable reaction product of:
(1) an isocyanate component having two or more isocyanate groups; and
(2) ethylenically unsaturated components comprising:
   (i) an acrylate component having at least one functional group that is reactive with an isocyanate group and at least one acrylate group; and
   (ii) an allyl component having at least one functional group that is reactive with an isocyanate group and at least one allyl group, wherein the reaction product is in the presence of at least one reactive diluent monomer suitable for reaction therewith to form a thermoset gel coat.

Suitably the thermosetting gel coat resin comprises the polymerisable product of reaction between isocyanate component (1) and ethylenically unsaturated components (2), diluted with one or more ethylenically unsaturated monomers suitable for crosslinking with the polymerisable reaction product to form a thermoset gel coat. Preferably the monomers are suitable for co-reaction through free radical polymerisation, to form a cured gel coat. Suitable procedures for forming the gel coat are discussed in more detail below.

The present inventor has surprisingly found that a thermosetting gel coat resin comprising a polymerisable reaction product of an isocyanate component having two or more isocyanate groups and ethylenically unsaturated components, wherein the ethylenically unsaturated components are selected to include (i) an acrylate component and (ii) an allyl component, has an enhanced combination of properties, especially when compared to gel coat resins derived from corresponding methacrylate and allyl components.

More specifically, the present inventor has recognised that thermosetting gel coat resins derived from an ethylenically unsaturated component (2) which is a combination of (i) acrylate component and (ii) allyl component provide an excellent combination of properties in terms of an acceptable back up time (in the order of about one hour), together with an increase tack-free time, thus resulting in an increased interval between the back up time and tack-free time.

The increase in the interval between the backup time and the tack-free time increases the time available to a manufacturer for achieving optimum results during the backing up procedure.

This results in improved production efficiency and also enhanced product quality for articles provided with the gel coat, especially in the case for large articles.

The increase in the interval between the back up time and tack-free time is significantly greater when a combination of acrylate and allyl components are employed, as compared to a corresponding combination of methacrylate and allyl components.

The various aspects of the present invention thus concern thermosetting gel coat resins and compositions containing them, kits comprising such thermosetting gel coat resins and compositions and cured gel coats derived therefrom.

The present invention is also concerned with processes for making such thermosetting gel coat resins and compositions as well as to the use of such resins and compositions for providing gel coats to articles, especially moulded articles, including laminated moulded articles.

Further aspects of the invention include moulded articles provided with a gel coat on a surface which is derived from the present thermosetting gel coat resin.

Preferred embodiments of various aspects of the invention may involve the following:

The present gel coat resin comprises a reaction product derived from an isocyanate component (1) having two or more isocyanate groups. Preferably the isocyanate component is in the form of an isocyanate terminated molecule obtainable by reaction of an isocyanate (X) having two or more isocyanate groups and an extender molecule (Y) having at least two functional groups each reactive with an isocyanate group.

The isocyanate terminated molecule may thus comprise a so called "chain extended" isocyanate. A chain extended isocyanate is an isocyanate formed from the reaction of a di or higher isocyanate (X) with an "extender" molecule (Y), which extender molecule comprises two or more functional groups that are reactive with an isocyanate group, to form an isocyanate terminated molecule of the form X-Y-X.

A greater or lesser degree of chain extension, i.e. higher or lower values of n in X-(Y-X)ₙ, can be achieved by controlling the relative amounts of isocyanate (X) and extender molecule (Y). Suitably n is in the range 1 to 5. It is particularly preferred that n = 1.

The extender molecule (Y) may include hydroxyl groups, amine groups, or a combination thereof for reaction with the isocyanate.

Preferably the extender molecule (Y) is a diol i.e. both of the functional groups available for reaction with isocyanate groups are hydroxyl groups.

Thus, as discussed in more detail below, an isocyanate terminated molecule may be provided by reaction of an excess of the di or higher isocyanate (X) with an extender molecule (Y), suitably at least a 2:1 excess based on moles of isocyanate (X) and extender molecule (Y).

Suitably the di or higher isocyanate is selected from the isocyanates discussed below.

The broad classes of diisocyanates commercially available include aliphatic alkylene diisocyanates {such as 1,6-hexamethylene diisocyanate (HDI), 1,4-tetramethylene diisocyanate and 1,12-dodecane diisocyanate, for example}, cyclo aliphatic diisocyanates (such as 1,3-and 1,4-cyclohexane diisocyanates and isophorone diisocyanate (IPDI) and including hydrogenated aromatic diisocyanates such as hydrogenated diphenylmethane diisocyanate (hMDI) hydrogenated toluene diisocyanate (hTDI), hydrogenated tetramethylxylylene diisocyanate (hTMXDI) and hydrogenated polymethylene polyphenyl diisocyanate (hPAPI), for example}, araliphatic diisocyanates {such as tetramethylenexylylene diisocyanate (TMXDI)} and aromatic diisocyanates {such as 2,4- and 2,6- toluene diisocyanate (TDI) and 2,2'-, 2,4'- and 4,4'-diphenylmethane diisocyanates, for example}..

Also, modified versions of such diisocyanates may be available, including dimers, trimers, uretidone-modified, urea modified, urethane modified and allophanate-modified diisocyanates.

The isocyanate component (1) is required to have two or more isocyanate groups i.e. to include an isocyanate having an isocyanate functionality of two or more. The functionality denotes the number of isocyanate groups (-NCO) per molecule i.e. a pure diisocyanate has an isocyanate functionality of 2. Various forms of modified di- and polyisocyanates are commercially available.

Example reactions to generate polyisocyanates are homooligomerisation reactions such as trimerisation (especially isocyanurate formation), dimerisation (uretidone formation) and biuret formation (reaction of urea of a diisocyanate with excessive diisocyanate).

Commercially available polyisocyanate products often comprise mixtures of various isomers and oligomers. In such cases the number average functionality of the blend of molecules is determined and is used by manufacturers to designate their commercial products.

The average isocyanate functionality is thus not necessarily an integer. For example, a mixture consisting essentially of uretidone dimer residues and isocyanurate trimer residues would have an average isocyanate functionality of between two and three, depending upon the relative amounts of the residues.

Thus, embodiments of the present invention may employ blends of such polyisocyanates, for example. Conveniently, polyisocyanates having a functionality of greater than 2 may in particular provide favourable results without the need for reaction with an extender molecule (Y). Suitable examples include polymeric derivatives of diphenylmethane diisocyanate.

In preferred embodiments the present gel coat resin is derived from an isocyanate component selected from one or more of cycloaliphatic diisocyanates such as isophorone diisocyanate (IPDI), araliphatic diisocyanates such as tetramethylenexylylene diisocyanate (TMXDI), alkylene diisocyanates such as hexamethylene diisocyanate (HDI) and trimethylhexamethylene diisocyanate (TMDI). In particularly preferred embodiments these isocyanates provide component (X) for reaction with an extender molecule (Y) to form in isocyanate terminated molecule.

It may also be preferred that the gel coat resin is derived from a non-aromatic isocyanate. Thus, in some preferred embodiments of the invention the diisocyanate does not contain an isocyanate group which is conjugated with an aromatic group.

It also may be preferable to employ a diisocyanate in which the respective isocyanate groups possess different reactivity.

In the cases where the isocyanate component is an isocyanate terminated molecule of the form X-(Y-X)ₙ, preferably the extender molecule (Y) is a diol (i.e. the functional group reactive with the isocyanate is a hydroxyl). The diol may be a simple diol, for example ethylene glycol, propylene glycol, 1,3-butanediol, neopentyl glycol, 1,6-hexanediol and such-like. Alternatively, the diol may be an ether diol (such as diethylene glycol or dipropylene glycol), a polyether diol (for instance, a polyethylene or polypropylene glycol), a polycaprolactone diol or a polyester diol. Preferred diols are ethylene glycol, diethylene glycol, dipropylene glycol, polyethylene glycol and polypropylene glycol.

Particularly preferred diols are ethylene glycol and polyethylene glycol. In the case of polyethylene glycol, preferably the Mw is less than 1000, more preferably less than 500 and even more preferably less than 400 and especially less than 300. A Mw in the range 150 to 250 is particularly preferred.

The isocyanate terminated molecule (1) is suitably obtainable by reaction of isocyanate component (X) with the extender molecule (Y) in the presence of a molar excess of isocyanate (X). Especially in the case where the isocyanate terminated molecule is in the form X-Y-X this is obtainable by reaction of about 1.5 to 2.5 moles of isocyanate (X) to 1 mole extender molecule (Y). Conveniently, the isocyanate terminated molecule (1) is obtainable by reaction of the isocyanate component (X) in at least a 2:1 excess based on moles of isocyanate (X) to moles of extender molecule (Y).

The reaction to provide an isocyanate terminated molecule is preferably initiated or undertaken prior to addition of ethylenically unsaturated components although this may not be essential.

Example reaction conditions to provide the isocyanate terminated molecule include heating the reactants at a temperature in the range of 50°C to 100°C in the presence of a catalyst to promote reaction between the functional groups of the extender molecule (Y) and the isocyanate (X).

In the present thermosetting gel coat resin an isocyanate component, preferably an isocyanate terminated molecule, undergoes reaction with an acrylate component (i). Preferably the acrylate component has a hydroxyl group for reaction with an isocyanate group to form a urethane linkage. Example acrylate components (i) may fall within the following general formulae (1), (2) or (3) 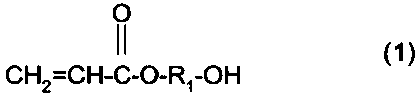 , wherein R₁ is a C₁ to C₈ alkyl group which may be optionally substituted, for example with one or more substituents selected from a C₁ to C₆ alkyl and a halo group (i.e. Cl, Br, F and I).

Further examples for the acrylate component may comprise an ethoxylated derivative of formula (2) 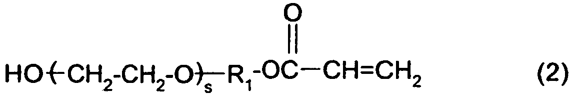 , or a propoxylated derivative of formula (3): 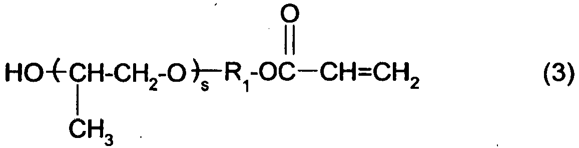 ,wherein S = 1 to 10 and R₁ is as defined above.

Additionally, a di or higher acrylate of any of the above may be employed.

Suitably, the acrylate component (i) may be selected from hydroxy (C1 to C8) alkyl acrylates, and modified versions thereof, especially ethoxylated, propoxylated and lactone extended versions thereof. Conveniently the acrylate component (i) contains only one hydroxyl-functional group i.e. it comprises a mono-hydroxy mono-acrylate. Preferably the hydroxyl group is a terminal hydroxyl group.

A preferred acrylate component (i) is a lactone-extended acrylate component, for example an E-caprolactone-extended acrylate component.

Suitably the lactone-extended acrylate component falls within the following general formula (4) 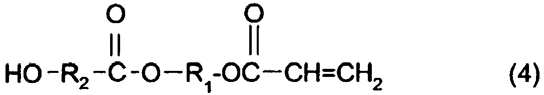 wherein R₁ is as defined above and R₂ is a C₁ to C₅ alkyl group which may be optionally substituted, for example with one or more substituents selected from a C₁ to C₃ alkyl. Suitably R₂ is a C₂ to C₅ alkyl group, preferably C₅ alkyl.

An example of a lactone-extended acrylate component is 2-hydroxyethyl acrylate extended with one mole of E-caprolactone:

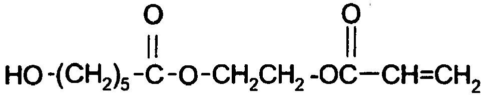

As noted above, a di or higher acrylate of a lactone-extended acrylate component may be employed.

Preferably, the acrylate component (i) is selected from hydroxyethyl acrylate, hydroxypropyl acrylate and hydroxybutyl acrylate and ethoxylated, propoxylated and lactone extended versions thereof. Specific example acrylates are 2-hydroxyethyl acrylate, 2-hydroxypropyl acrylate and 4-hydroxybutyl acrylate. Example ethoxylated acrylates commercially available are derived from hydroxyethylacrylate and 5 or more moles ethylene oxide.

According to some embodiments of the thermosetting gel coat resin the acrylate component (i) may also include a di or higher acrylate such as pentaerythritol triacrylate and dipentaerythritol pentaacrylate.

The present thermosetting gel coat resin is also derived from an ethylenically unsaturated component (2) which includes an allyl component having at least one functional group that is reactive with an isocyanate group of the isocyanate component. Typically the allyl component (ii) has a hydroxyl group for reaction with an isocyanate group.

Example allyl components may fall within the following general formulae (5), (6) or (7)

CH₂=CH-CH₂-OR₃ (5)

wherein R₃ is H or a hydroxy alkyl group or an ethoxylated version thereof of formula (6) or (6') 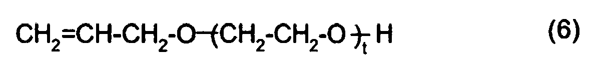 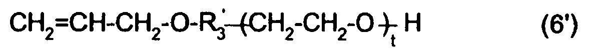 or a propoxylated version thereof of formula (7) or (7'), 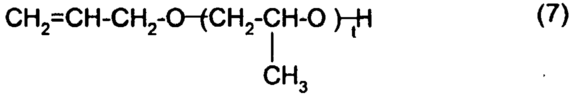 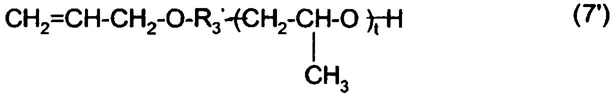 wherein t = 1 to 10 and R₃' is an alkyene group, for example C₁ to C₆ alkylene.

Additionally a di or higher allyl ether of any of the above may be employed.

Example allyl components include allylic functionalised alcohols especially allyl alcohol, ethoxylated allyl alcohol, propoxylated allyl alcohol, lactone extended versions of allyl alcohol and trimethylol propane diallyl ether (TMPDE). Furthermore, the allyl component (ii) may be a di or higher allyl such as trimethylol propane diallyl ether and/or pentaerythritol triallyl ether.

A particularly preferred allyl component is trimethylol propane diallyl ether (TMPDE), which has the following structure

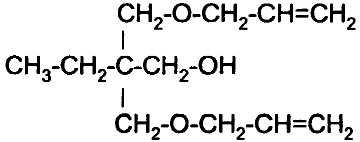

Preferably the allyl component contains one hydroxyl group for reaction with the isocyanate groups.

An example of a lactone-extended allyl component (ii) is an E-caprolactone-extended allyl component.

Analogous to the lactone-extended acrylate components discussed above, the lactone-extended allyl component suitably falls within the following general formula (8) 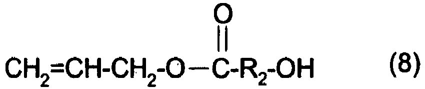 wherein R₂ is as defined above, or an ethoxylated lactone-extended version thereof of formula (9) or (9') 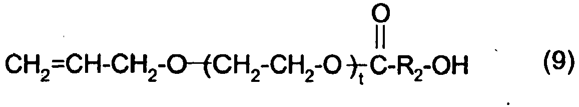 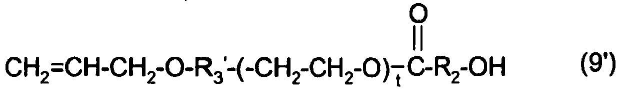 or a propoxylated version thereof of formula (10) or (10') 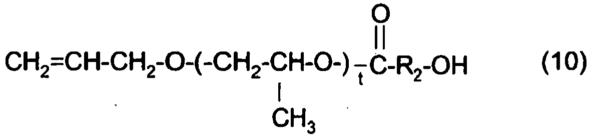 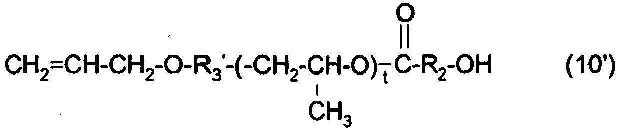 wherein t and R₃' are as defined above.

As noted above, a di or higher allyl of a lactone-extended allyl component may be employed.

The present inventor has found that the properties of the final resin are improved if, as is preferred, the ethylenically unsaturated components (2) are present in stoichiometric excess with respect to the isocyanate groups of the isocyanate component (1). That is, the number of functional groups reactive with the isocyanate group of the isocyanate component (thus, suitably the number of hydroxyl groups) is greater than the number of isocyanate groups.

In particular, the total amount of ethylenically unsaturated component (2), is preferably present in at least 3%, preferably at least 5%, equivalence excess (equivalents of hydroxyl-functionality over isocyanate functionality) with respect to the isocyanate groups of the isocyanate component. Even better results may be achieved if the component (2) is present in at least 20% equivalence excess, more preferably at least 35% equivalence excess, with respect to the isocyanate groups of the isocyanate component.

It is particularly preferred that each ethylenically unsaturated component (i), (ii) is present in substoichiometric amounts relative to the isocyanate component. However, preferably the combined amounts of ethylenically unsaturated components (i) and (ii) represent a stoichiometric excess of functional groups reactive with the isocyanate group, as compared to the isocyanate component.

In some embodiments the ethylenically unsaturated component (2) comprises an acrylate component (i) and an allyl component (ii) in a molar ratio of at least 1.5:1 in terms of an excess of acrylate component (i) over allyl component (ii). In particularly preferred embodiments the ethylenically unsaturated component (2) comprises acrylate component (i) and allyl component (ii) in a molar ratio of from 1.5:1 to 10:1, especially 2:1 to 8:1, more especially 2.1:1 to 7.5:1.

Also the relative amounts of acrylate component (i) and allyl component (ii) are suitably selected so that at least 50% of the isocyanate groups provided by the isocyanate component react with acrylate component (i), conveniently at least 60% and more preferably at least 70%, with the remainder available for reaction with allyl component (ii). It is also preferred that no more than 95%, more preferably no more than 90% of the isocyanate groups undergo reaction with the acrylate component (i).

In the present invention, conveniently ethylenically unsaturated component (2) contains no more than 10wt% of any methacrylate component and for example may be essentially free of methacrylate component.

For the reaction to provide the polymerisable reaction product for the gel coat resin, suitably the isocyanate (1) and the ethylenically unsaturated component (2) are reacted at a temperature in the range 50° to 100°C, more preferably 70 to 90°C. Most suitably the isocyanate component and the ethylenically unsaturated component are reacted at a temperature in the range 70 to 75°C.

Preferably the reaction between the isocyanate (1) and the ethylenically unsaturated component (2) is continued until the isocyanate content is less than 1%, preferably less than 0.5% and conveniently between 0.1 to 0.4% (as measured in accordance with the method discussed below in relation to the Examples).

Suitably, the process includes adding a catalyst to catalyse the reaction between the ethylenically unsaturated components (2) and the isocyanate component (1).

A preferred catalyst is a metal salt, more preferably a metal carboxylate. Tin catalysts are preferred, especially dibutyltin dilaurate.

The reaction between the isocyanate component (1) and the ethylenically unsaturated components (2) may optionally be conducted in one stage (in which component (i) and (ii) are provided together) or more preferably in separate stages, especially with supply of acrylate component (i) followed by allyl component (ii).

Conveniently the reaction between the isocyanate (1) and the acrylate component (i) is continued until the isocyanate content is less than about 3.0% and preferably between about 1.5 to 2.5%. The subsequent reaction with the allyl component (ii) may be continued with until the isocyanate content is less than about 0.5% and preferably between about 0.4 and 0.1%.

A thermosetting gel coat resin according to the present invention suitably comprises a polymerisable reaction product of (1) and (2) in the presence of reactive diluent monomer suitable for reaction therewith to form a thermoset gel coat. Typically, the reactive diluent monomer has at least one ethylenically unsaturated bond and is suitable for curing via a free radical polymerisation process.

Preferred examples of a reactive diluent monomer comprising one ethylenically unsaturated group include styrene, methylstyrene, ethyl styrene, halogenated styrene and vinyl toluene. Such monomers can be added to the reactive composition comprising the isocyanate component and the ethylenically unsaturated component (2) (i.e. prior to reaction), for example to lower viscosity during the reaction.

It is especially preferred that the reactive diluent monomer system includes at least some vinylaromatic monomer, such as styrene and/or vinyltoluene.

Conveniently, example gel coat resins may comprise up to 40% by weight of reactive diluent monomer(s), preferably between 25 and 35wt%.

Example thermosetting gel coat resins according to embodiments of the invention may thus comprise
a polymerisable reaction product of:
(1) an isocyanate terminated molecule obtainable by reaction of an isocyanate (X) selected from one or more of cycloaliphatic diisocyanates such as isophorone diisocyanate (IPDI) and araliphatic diisocyanates such as tetramethylenexylylene diisocyanate (TMXDI) with an extender molecule (Y) which is a diol having a molecular weight of less than 300; and
   (i) a mono hydroxy acrylate or diacrylate component; and
   (ii) a mono hydroxy allyl or diallyl component;
wherein the polymerisable reaction product is in the presence of one or more vinyl aromatic reactive diluent monomers.

A second aspect of the invention concerns thermosetting gel coat resin compositions containing the thermosetting gel coat resin of the first aspect of the invention. In addition to the gel coat resin such compositions may contain, for example, pigments, opacifiers, thixotropes, components for providing resistance to UV or UV radiation and components for effecting crosslinking or curing of the composition to form the cured gel coat.

Suitably, the gel coat composition undergoes crosslinking by use of an initiator for initiating cross-linking and curing of the gel coat resin. Thus, the initiator is generally a free radical initiator, i.e. it provides a source of free radicals to initiate free radical polymerisation. Appropriate initiators are those proposed for thermal curing (whether at ambient or elevated temperatures) rather than those which require UV activation.

Preferably the initiator includes a peroxide and at least one selected from a metal salt and an amine. Most preferably the initiator is in the form of a liquid. Suitable initiators for room temperature curing include dibenzoyl peroxide, acetylacetone peroxide, cumene hydroperoxide and other methyl ethyl ketone peroxides known as medium and high reactivity MEKPs. For curing at elevated temperatures, example initiators include dibenzoyl peroxide, dicumyl peroxide, peresters and perketals.

Preferably the peroxide is selected from methyl ethyl ketone peroxide, t-butyl perbenzoate (for example, available as Trigonox C from Akzo Nobel). Suitably this is employed with a metal salt, preferably cobalt octoate, optionally in combination with potassium octoate or calcium octoate, optionally in combination with an amine (such as diethyl aniline and/or an amide such as dimethylacetoacetamide).

Furthermore, benzoyl peroxide or cyclohexanone peroxide can be used with an amine accelerator such as dimethyl or diethyl aniline.

A thermosetting gel coat resin composition of the invention may comprise the thermosetting gel coat resin in combination with a thixotrope for adjusting rheological properties of the composition. Suitably the amount and type of thixotrope is selected to provide a composition having a thixotropic index of above 10, preferably between 15 to 40, especially between 20 to 40 and more preferably about 25 to 35, when measured at 25°C.

The rheological properties required will depend upon the technique proposed for application of the gel coat.

Suitably a gel coat resin composition intended for brush application would exhibit a high shear viscosity of at least 5 poise at 25°C, preferably at least 10 poise, especially between 10 and 20 poise.

A preferred example thixotrope comprises fumed silica. Conveniently, example compositions contain at least 1.5wt% thixotrope, based on the weight of the composition, in order to provide the desired rheological properties.

Additionally or alternatively the thermosetting gel coat resin may comprise pigments or opacifiers (such as titanium dioxide, for enhancing the appearance of the cured gel coat).

Furthermore, a thermosetting gel coat resin composition may comprise the thermosetting gel coat resin in combination with an additive providing protection against UV or IR degradation.

According to embodiments of the invention the thermosetting gel coat resin composition may contain components of an initiator system. For example, the composition may contain additives such as metal salts and/or amines for subsequent reaction with a peroxide initiator.

Thus, in the second aspect the present invention provides a thermosetting gel coat resin composition containing a thermosetting gel coat resin as described in any one of the embodiments relating to the first aspect of the invention.

Also disclosed is a process for producing a thermosetting gel coat resin of the first aspect, the process comprising supplying isocyanate component (1) and ethylenically unsaturated components (2), allowing the isocyanate groups of the isocyanate component (1) to undergo reaction with the functional groups of the ethylenically unsaturated components (2) to produce a polymerisable reaction product, and once the isocyanate content of the reaction mixture has reduced to a desired level, adding reactive diluent monomer.

Preferred embodiments of this process in terms of reagents and process conditions, have been described above in relation to the description of the polymerisable reaction product present in the thermosetting gel coat resin.

A related process disclosed herein concerns a process for producing a thermosetting gel coat resin composition which comprises supplying, to a thermosetting gel coat resin of the first aspect, one or more components selected from: pigment, opacifier, thixotrope, UV absorber, IR absorber and components of a free radical initiator system.

Also disclosed is a kit for a thermosetting gel coat which comprises a thermosetting gel coat resin in accordance with the first aspect, or a thermosetting gel coat resin composition in accordance with the second aspect, in combination with a free radical initiator to effect curing of the gel coat resin. Preferably such a kit may include a peroxide initiator in combination with a thermosetting gel coat resin composition which optionally includes additives such as metal salt and/or amine for enhancing activity of the peroxide.

As noted above, the present gel coat resins and gel coat compositions are especially suitable for providing a gel coat on an exterior surface of a molded article. In this respect the gel coat may be regarded as providing a "show surface" of improved appearance to a support layer intended to provide structural integrity and durability.

The present thermosetting gel coat resins and compositions are especially advantageous for application to fiber reinforced moulded articles, including those in which the support layer is itself composed of one, two or more layers. The present gel coat resins and compositions may be employed to provide a show surface on support layers derived from thermosetting resins such as unsaturated polyesters, vinyl esters, urethane (meth)acrylates and allyl urethane (meth)acrylates, and especially to fiber reinforced articles in which the laminated resin is selected from urethane acrylates and more preferably allyl urethane acrylates.

A further aspect of the invention concerns a method of providing a gel coat on a support layer, the method comprising applying the present gel coat composition and free radical initiator to a mould surface, allowing the gel coat composition to at least partially cure, applying an optionally reinforced thermosetting moulding composition to the gel coat layer and curing the moulding composition to provide a support layer for the gel coat.

The present method thus involves the application of the moulding composition for a support layer to the gel coat layer once the back-up time has elapsed. The method may also include the step of applying reinforcement (such as fibrous reinforcement, especially glass fibers etc.), prior to the application of the moulding composition for the support layer.

A process for producing a moulded article having a gel coat on a show surface thereof may involve more than one step of applying the moulding composition for the support layer, optionally alternating with application of reinforcement. In such embodiments the support layer may be considered to be a laminate i.e. is composed of several discernible layers.

Further aspects of the invention also concern an article having a gel coat prepared by curing a gel coat composition of the invention.

Also disclosed is the use of a thermosetting gel coat resin in accordance with the first aspect of the invention to provide a gel coat on a support surface.

Particularly preferred embodiments of the present invention will now be described, by way of example:

### EXAMPLES

### Materials and Methods

Isophorone diisocyanate monomer-available from Bayer as Desmodur I.

Trimethylolpropane diallyl ether was obtained from Perstorp as TMPDE 80.

m-TMXDI is a proprietary grade of metatetramethylxylylene diisocyanate available from Cytec Industries Inc.

Fascat 4202HP is a proprietary tin-based reaction catalyst available from Atofina.

Butanox LPT is a proprietary methyl ethyl ketone peroxide available from Akzo Nobel.

Inhibitor T is a 33% wt solution of toluhydroquinone in diethylene glycol.

Accelerator G is a solution of cobalt (II) octoate in styrene available from Scott Bader Company Limited, the cobalt concentration being 1.00% wt.

Accelerator E is a solution of cobalt (II) octoate in styrene available from Scott Bader Company Limited, the cobalt concentration being 0.42% wt.

Solution Z is a proprietary solution of a silicone oil in styrene, available from Scott Bader Company Limited.

Uvasorb MET is a proprietary benzophenone-derived UV absorber available from 3V Sigma SpA.

Cab-o-sil M5 is a proprietary grade of fumed silica available from Cabot GmbH.

TR81 is a proprietary grade of titanium dioxide available from Huntsman Corporation.

The isocyanate content of the reaction mixtures described, during processing, is determined by dissolving a small sample of the mixture (0.5 - 1.5g) in dry tetrahydrofuran, reacting the residual isocyanate with a metered quantity of di-n-butylamine and back-titrating the unreacted di-n-butylamine with 0.1M hydrochloric acid.

The gel time of the liquid resins described was measured at 25°C according to BS2782 Part 8 Method 835C (1980) using a Techne gel timer as the mechanised timing device. In this method, 100g of resin is catalysed with 2% Accelerator G plus 2% Butanox LPT and maintained at 25°C whilst the gel time is determined by means of a vertically moving plunger driven by the Techne gel timer.

ICI cone and plate viscosities of the liquid resins were measured at 25°C using a viscometer manufactured by Research Equipment (London) Limited, fitted with a 19.5mm cone rotating at 750rpm.

To determine the backup time of each gelcoat, 2% by weight of Butanox LPT was stirred into the gelcoat sample. The time at which the catalyst was added was recorded and taken as the start time. The catalysed sample was then brushed out onto a glass plate, precoated with a suitable release agent, to a wet film thickness of 600 - 800 microns as determined by an Elcometer Wet film Thickness Gauge. The remainder of the gelcoat was tested with a spatula periodically and the time at which the material ceased to flow and began to tear was taken as the Bulk Gel Time. In a similar manner, the film was "scratched" periodically with the edge of a spatula and the time at which the resin ceased to flow back into the "scratch" and began to tear was taken as the Film Gel Time. The film was then tested periodically with a finger and the time at which the film felt tacky but no wet gelcoat adhered to the finger was taken as the Back-up Time. Testing continued with a finger in the above manner until the film ceased to be tacky to the touch and this time was taken as the Tack Free Time. The above tests were carried out on several areas of the film under test at each determination in order to ensure that the times recorded were representative of the whole film and not just a small area.

Gelcoated laminates for gelcoat strain-to-failure tests were prepared by first catalysing the gelcoat by dispersing within it 2% by weight of Butanox LPT. The catalysed gelcoat was then spread out on a piece of clear PET sheet to give an even film of between 600µ and 800µ thickness, again as determined by an Elcometer Wet film Thickness Gauge. Once the appropriate backup time (as determined above) was reached, a layer of glass fibre in the form of 450gsm powder-bound chopped strand mat was placed on the gelcoat layer and an appropriate quantity of the specified resin, catalysed with 2% Butanox LPT plus 2% Accelerator G, wetted into it by means of brush and hand roller. This laying up process was repeated with three further layers of 450gsm chopped strand mat, giving a gelcoated laminate 4 layers thick. The overall weight of catalysed resin used in the process was 2½ times the total weight of the glass. The finished laminates were left to cure for 24 hours at ambient temperature, followed by a post-cure of 16 hours at 40°C. The thickness of each laminate was measured with a micrometer and the glass content determined by the method of the standard EN 60 (1977).

The gelcoat strain to failure test was a three-point bend test similar to BS EN ISO 14125:1998A. Test specimens of length 150mm and width 25mm were cut from each laminate and mounted, gelcoat side downwards, in a jig appropriate for the ISO 14125 standard method. In each case, the span between the mounting points of the test piece was set to 32 times the thickness of the laminate. The jig was mounted in an Instron 3369 dual column universal mechanical testing machine and the moving support positioned in the centre of the test specimen. The test was then performed under a load of 1kN at a speed of 5mm per minute, the stress-strain data being recorded electronically. The strain under which the gelcoat first cracked could easily be identified from the resulting stress-strain plot generated by the computer from the stored data.

### Example 1

Into a 2-litre, lidded round-bottomed flask equipped with reflux condenser, motorised anchor stirrer and temperature probe was charged 615.81g of isophorone diisocyanate, 400.00g of styrene and a mixture of inhibitors consisting of 0.40g of 4-methoxyphenol, 0.10g of 1,4-benzoquinone and 0.5g of Inhibitor T. This mixture was heated, with stirring, to a temperature between 60 and 65°C before addition of a solution of 0.10g of Fascat 4202HP dissolved in 0.90g styrene. Following this, 277.39g of polyethylene glycol (average molecular weight 200) was added dropwise over half an hour, maintaining the temperature in the flask between 60 and 65°C during this addition. One hour after completion of the addition, the isocyanate content of the reaction mixture was found to be 9.2%. A further solution of 0.10g of Fascat 4202HP dissolved in 0.90g styrene was then added to the flask, followed by dropwise addition of 225.24g of 2-hydroxyethyl acrylate. The reaction is exothermic, such that the temperature in the flask rose to 70°C. Thereafter, the rate of addition of the 2-hydroxyethyl acrylate was adjusted in order to maintain a temperature between 70 and 75°C in the flask. The total 2-hydroxyethyl acrylate addition time was 25 minutes. Once this addition was complete, the reaction mixture was stirred at 70-75°C for 65 minutes, until the isocyanate content had dropped to 2.40%. 181.55g of trimethylolpropane diallyl ether was then added dropwise over 30 minutes, again maintaining the temperature in the flask between 70 and 75°C. After completion of this addition, the mixture was stirred at 70-75°C until the isocyanate content had dropped to 0.37%, which took approximately seven hours. It was then cooled to below 40°C before addition of a further 297.00g of styrene. The product allyl urethane acrylate resin was a liquid having a viscosity of 3.3 Poise at 25°C, as measured by ICI cone and plate viscometer, and a gel time of 13.3 minutes.

### Example 2

Into a 2-litre, lidded round-bottomed flask equipped with reflux condenser, motorised anchor stirrer and temperature probe was charged 635.05g of isophorone diisocyanate, 400.00g of styrene and a mixture of inhibitors consisting of 0.40g of 4-methoxyphenol, 0.10g of 1,4-benzoquinone and 0.5g of Inhibitor T. This mixture was heated, with stirring, to a temperature between 60 and 65°C before addition of a solution of 0.10g of Fascat 4202HP dissolved in 0.90g styrene. Following this, 286.06g of polyethylene glycol (average molecular weight 200) was added dropwise over 50 minutes, maintaining the temperature in the flask between 60 and 65°C during this addition. One hour after completion of the addition, the isocyanate content of the reaction mixture was found to be 9.1%. A further solution of 0.10g of Fascat 4202HP dissolved in 0.90g styrene was then added to the flask, followed by dropwise addition of 298.65g of 2-hydroxyethyl acrylate. As before, the exotherm from the reaction was allowed to raise the temperature in the flask to 70°C before controlling the rate of addition of the 2-hydroxyethyl acrylate in order to maintain a temperature between 70 and 75°C. The total 2-hydroxyethyl acrylate addition time was 40 minutes. Once this addition was complete, the reaction mixture was stirred at 70-75°C for 50 minutes, until the isocyanate content had dropped to 1.98%. 80.24g of trimethylolpropane diallyl ether was then added dropwise over 15 minutes, again maintaining the temperature in the flask between 70 and 75°C. After completion of this addition, the mixture was stirred at 70-75°C until the isocyanate content had dropped to 0.11%, which took approximately 4½ hours. It was then cooled to below 40°C before addition of a further 297.00g of styrene. The product allyl urethane acrylate resin was a liquid having a viscosity of 3.9 Poise at 25°C, as measured by ICI cone and plate viscometer, and a gel time of 11.7 minutes.

### Example 3

Into a 1-litre, lidded round-bottomed flask equipped with reflux condenser, motorised anchor stirrer and temperature probe was charged 295.55g of isophorone diisocyanate, 200.00g of styrene and a mixture of inhibitors consisting of 0.20g of 4-methoxyphenol, 0.05g of 1,4-benzoquinone and 0.25g of Inhibitor T. This mixture was heated, with stirring, to a temperature between 60 and 65°C before addition of a solution of 0.05g of Fascat 4202HP dissolved in 0.45g styrene. Following this, 133.13g of polyethylene glycol (average molecular weight 200) was added dropwise over 35 minutes, maintaining the temperature in the flask between 60 and 65°C during this addition. One hour twenty minutes after completion of the addition, the isocyanate content of the reaction mixture was found to be 9.4%. A further solution of 0.05g of Fascat 4202HP dissolved in 0.45g styrene was then added to the flask, followed by dropwise addition of 134.19g of hydroxypropyl methacrylate. As before, the exotherm from the reaction was allowed to raise the temperature in the flask to 70°C before controlling the rate of addition of the hydroxypropyl methacrylate in order to maintain a temperature between 70 and 75°C. The total hydroxypropyl methacrylate addition time was 35 minutes. Once this addition was complete, the reaction mixture was stirred at 70-75°C for 45 minutes, until the isocyanate content had dropped to 2.60%. 87.13g of trimethylolpropane diallyl ether was then added dropwise over 30 minutes, again maintaining the temperature in the flask between 70 and 75°C. After completion of this addition, the mixture was stirred at 70-75°C until the isocyanate content had dropped to 0.09%, which took approximately 5½ hours. It was then cooled to below 40°C before addition of a further 148.50g of styrene. The product allyl urethane methacrylate resin was a liquid having a viscosity of 3.0 Poise at 25°C, as measured by ICI cone and plate viscometer, and a gel time of 20.8 minutes.

### Example 4

Into a 1-litre, lidded round-bottomed flask equipped with reflux condenser, motorised anchor stirrer and temperature probe was charged 300.85g of isophorone diisocyanate, 200.00g of styrene and a mixture of inhibitors consisting of 0.20g of 4-methoxyphenol, 0.05g of 1,4-benzoquinone and 0.25g of Inhibitor T. This mixture was heated, with stirring, to a temperature between 60 and 65°C before addition of a solution of 0.05g of Fascat 4202HP dissolved in 0.45g styrene. Following this, 135.52g of polyethylene glycol (average molecular weight 200) was added dropwise over 45 minutes, maintaining the temperature in the flask between 60 and 65°C during this addition. One hour ten minutes after completion of the addition, the isocyanate content of the reaction mixture was found to be 9.3%. A further solution of 0.05g of Fascat 4202HP dissolved in 0.45g styrene was then added to the flask, followed by dropwise addition of 175.63g of hydroxypropyl methacrylate. As before, the exotherm from the reaction was allowed to raise the temperature in the flask to 70°C before controlling the rate of addition of the hydroxypropyl methacrylate in order to maintain a temperature between 70 and 75°C. The total hydroxypropyl methacrylate addition time was 20 minutes. Once this addition was complete, the reaction mixture was stirred at 70-75°C for 105 minutes, until the isocyanate content had dropped to 1.75%. 38.01g of trimethylolpropane diallyl ether was then added dropwise over 15 minutes, again maintaining the temperature in the flask between 70 and 75°C. After completion of this addition, the mixture was stirred at 70-75°C until the isocyanate content had dropped to 0.09%, which took approximately three hours. It was then cooled to below 40°C before addition of a further 148.50g of styrene. The product allyl urethane methacrylate resin was a liquid having a viscosity of 3.5 Poise at 25°C, as measured by ICI cone and plate viscometer, and a gel time of 14.8 minutes.

### Example 5

Into a 2-litre, lidded round-bottomed flask equipped with reflux condenser, motorised anchor stirrer and temperature probe was charged 650.29g of isophorone diisocyanate, 400.00g of styrene and a mixture of inhibitors consisting of 0.40g of 4-methoxyphenol, 0.10g of 1,4-benzoquinone and 0.5g of Inhibitor T. This mixture was heated, with stirring, to a temperature between 60 and 65°C before addition of a solution of 0.10g of Fascat 4202HP dissolved in 0.90g styrene. Following this, 292.92g of polyethylene glycol (average molecular weight 200) was added dropwise over 35 minutes, maintaining the temperature in the flask between 60 and 65°C during this addition. One hour ten minutes after completion of the addition, the isocyanate content of the reaction mixture was found to be 9.15%. A further solution of 0.10g of Fascat 4202HP dissolved in 0.90g styrene was then added to the flask, followed by dropwise addition of 356.78g of 2-hydroxyethyl acrylate. As before, the exotherm from the reaction was allowed to raise the temperature in the flask to 70°C before controlling the rate of addition of the 2-hydroxyethyl acrylate in order to maintain a temperature between 70 and 75°C. The total 2-hydroxyethyl acrylate addition time was 45 minutes. After completion of this addition, the mixture was stirred at 70-75°C until the isocyanate content had dropped to 0.23%, which took approximately 2½ hours. It was then cooled to below 40°C before addition of a further 297.00g of styrene. The product urethane acrylate resin was a liquid having a viscosity of 3.9 Poise at 25°C, as measured by ICI cone and plate viscometer, and a gel time of 9.9 minutes.

### Example 6

Into a 1-litre, lidded round-bottomed flask equipped with reflux condenser, motorised anchor stirrer and temperature probe was charged 304.95g of isophorone diisocyanate, 200.00g of styrene and a mixture of inhibitors consisting of 0.20g of 4-methoxyphenol, 0.05g of 1,4-benzoquinone and 0.25g of Inhibitor T. This mixture was heated, with stirring, to a temperature between 60 and 65°C before addition of a solution of 0.05g of Fascat 4202HP dissolved in 0.45g styrene. Following this, 137.36g of polyethylene glycol (average molecular weight 200) was added dropwise over 35 minutes, maintaining the temperature in the flask between 60 and 65°C during this addition. One hour and twenty-five minutes after completion of the addition, the isocyanate content of the reaction mixture was found to be 9.00%. A further solution of 0.05g of Fascat 4202HP dissolved in 0.45g styrene was then added to the flask, followed by dropwise addition of 207.69g of hydroxypropyl methacrylate. As before, the exotherm from the reaction was allowed to raise the temperature in the flask to 70°C before controlling the rate of addition of the hydroxypropyl methacrylate in order to maintain a temperature between 70 and 75°C. The total hydroxypropyl methacrylate addition time was 45 minutes. After completion of this addition, the mixture was stirred at 70-75°C until the isocyanate content had dropped to 0.15%, which took approximately 2¼ hours. It was then cooled to below 40°C before addition of a further 148.50g of styrene. The product urethane methacrylate resin was a liquid having a viscosity of 3.4 Poise at 25°C, as measured by ICI cone and plate viscometer, and a gel time of 13.2 minutes.

### Example 7

Into a 2-litre, lidded round-bottomed flask equipped with reflux condenser, motorised anchor stirrer and temperature probe was charged 499.32g of m-TMXDI, 300.00g of styrene and a mixture of inhibitors consisting of 0.30g of 4-methoxyphenol, 0.075g of 1,4-benzoquinone and 0.375g of Inhibitor T. This mixture was heated, with stirring, to a temperature between 60 and 65°C before addition of a solution of 0.075g of Fascat 4202HP dissolved in 0.675g styrene. Following this, 204.64g of polyethylene glycol (average molecular weight 200) was added dropwise over 50 minutes, maintaining the temperature in the flask between 60 and 65°C during this addition. 45 minutes after completion of the addition, the isocyanate content of the reaction mixture was found to be 8.6%. A further solution of 0.075g of Fascat 4202HP dissolved in 0.675g styrene was then added to the flask, followed by dropwise addition of 213.64g of 2-hydroxyethyl acrylate. As before, the exotherm from the reaction was allowed to raise the temperature in the flask to 70°C before controlling the rate of addition of the 2-hydroxyethyl acrylate in order to maintain a temperature between 70 and 75°C. The total 2-hydroxyethyl acrylate addition time was 40 minutes. Once this addition was complete, the reaction mixture was stirred at 70-75°C for 30 minutes, until the isocyanate content had dropped to 1.90%. 57.40g of trimethylolpropane diallyl ether was then added dropwise over 15 minutes, again maintaining the temperature in the flask between 70 and 75°C. After completion of this addition, the mixture was stirred at 70-75°C until the isocyanate content had dropped to 0.19%, which took approximately 4½ hours. It was then cooled to below 40°C before addition of a further 222.75g of styrene. The product allyl urethane acrylate resin was a liquid having a viscosity of 2.4 Poise at 25°C, as measured by ICI cone and plate viscometer, and a gel time of 16.9 minutes.

### Example 8

Into a 2-litre, lidded round-bottomed flask equipped with reflux condenser, motorised anchor stirrer and temperature probe was charged 603.20g of isophorone diisocyanate, 400.00g of styrene and a mixture of inhibitors consisting of 0.40g of 4-methoxyphenol, 0.10g of 1,4-benzoquinone and 0.50g of Inhibitor T. This mixture was heated, with stirring, to a temperature between 60 and 65°C before addition of a solution of 0.10g of Fascat 4202HP dissolved in 0.90g styrene. Following this, 271.71g of polyethylene glycol (average molecular weight 200) was added dropwise over 50 minutes, maintaining the temperature in the flask between 60 and 65°C during this addition. One hour ten minutes after completion of the addition, the isocyanate content of the reaction mixture was found to be 8.8%. A further solution of 0.10g of Fascat 4202HP dissolved in 0.90g styrene was then added to the flask, followed by dropwise addition of 247.26g of hydroxyethyl methacrylate. As before, the exotherm from the reaction was allowed to raise the temperature in the flask to 70°C before controlling the rate of addition of the hydroxyethyl methacrylate in order to maintain a temperature between 70 and 75°C. The total hydroxyethyl methacrylate addition time was 50 minutes. Once this addition was complete, the reaction mixture was stirred at 70-75°C for 45 minutes, until the isocyanate content had dropped to 2.25%. 177.83g of trimethylolpropane diallyl ether was then added dropwise over 25 minutes, again maintaining the temperature in the flask between 70 and 75°C. After completion of this addition, the mixture was stirred at 70-75°C until the isocyanate content had dropped to 0.10%, which took approximately 4½ hours. It was then cooled to below 40°C before addition of a further 297.00g of styrene. The product allyl urethane methacrylate resin was a liquid having a viscosity of 3.7 Poise at 25°C, as measured by ICI cone and plate viscometer, and a gel time of 14.2 minutes.

### Gelcoat A

30.00g of titanium dioxide TR81 was dispersed into 88.00g of the allyl urethane acrylate resin of Example 1 using a high-shear stirrer. 0.25g of Uvasorb MET and 4.00g of Cab-o-sil M5 fumed silica were then similarly stirred into the dispersion. Stirring was continued while periodically testing the dispersion by means of a Hegman gauge. When the reading on the Hegman gauge reached at least 7, a further 69.00g of the allyl urethane acrylate resin of Example 1 was stirred in, followed by 6.25g of styrene, 0.30g of Solution Z, 0.70g of cobalt octoate (6% cobalt content) and 1.50 of polyethylene glycol (average molecular weight 6000; 10% of solution in styrene). After a further five minutes' stirring, the gelcoat was ready to use.

### Gelcoat B

This was prepared in identical fashion to Gelcoat A, except that the allyl urethane acrylate resin of Example 2 was used in place of the allyl urethane acrylate resin of Example 1.

### Gelcoat C

This was prepared in identical fashion to Gelcoat A, except that the allyl urethane methacrylate resin of Example 3 was used in place of the allyl urethane acrylate resin of Example 1.

### Gelcoat D

This was prepared in identical fashion to Gelcoat A, except that the urethane acrylate resin of Example 5 was used in place of the allyl urethane acrylate of Example 1

### Gelcoat E

This was Crystic GC65PA White 337, a proprietary white unsaturated isophthalic polyester gelcoat commercially available from Scott Bader Company Limited.

### Gelcoat F

This was prepared in identical fashion to Gelcoat A, except that the allyl urethane acrylate resin of Example 7 was used in place of the allyl urethane acrylate resin of Example 1.

### Gelcoat G

This was prepared in identical fashion to Gelcoat A, except that the allyl urethane methacrylate resin of Example 8 was used in place of the allyl urethane acrylate resin of Example 1.

The geltimes, backup times and tack-free times of the five gelcoats were evaluated by the methods previously described under the "Materials and Methods" section. The results are shown in Table I below.

**Table I**

| GELCOAT | RESIN | TYPE | BULK GELTIME | FILM GELTIME | BACKUP TIME | TACK-FREE TIME |
|---|---|---|---|---|---|---|
| Gelcoat A | 1 | Inventive | 20 min | 23 min | 52 min | >300 min |
| Gelcoat B | 2 | Inventive | 17 min | 28 min | 52 min | >300 min |
| Gelcoat C | 3 | Comparative | 30 min | 34 min | 59 min | 89 min |
| Gelcoat D | 5 | Comparative | 16 min | 22 min | 58 min | 108 min |
| Gelcoat E | | Comparative | 17 min | 20 min | 50 min | 115 min |
| Gelcoat F | 7 | Inventive | 30 min | 33 min | 56 min | >300 min |
| Gelcoat G | 8 | Comparative | 22 min | 29 min | 75 min | 120 min |

These results clearly show that the gelcoats of the invention, based on the allyl urethane acrylate resins, have a much longer interval between the backup time and the tack-free time. These inventive would therefore give the manufacturer of gelcoated, fibre-reinforced articles a much longer working window within which to lay up the reinforced layers onto the gelcoat than would the comparative gelcoats of the known art.

To assess the mechanical performance of the inventive gelcoats, a number of gelcoated test laminates were prepared according to the procedure set out earlier under 'Materials and Methods'. These were subjected to the gelcoat strain-to-failure test, the results being shown in Table II below.

**Table II**

| GELCOAT | LAMINATING RESIN | AVERAGE SPECIMEN THICKNESS | LAMINATE GLASS CONTENT | GELCOAT STRAIN TO FAILURE |
|---|---|---|---|---|
| Gelcoat A | Example 3 | 4.47mm | 34.1% | 3.19% |
| Gelcoat B | Example 4 | 4.74mm | 30.9% | 2.33% |
| Gelcoat C | Example 3 | 4.54mm | 31.4% | 3.53% |
| Gelcoat D | Example 6 | 4.28mm | 32.9% | 3.42% |
| Gelcoat E | Example 3 | 3.93mm | 37.6% | 3.68% |
| Gelcoat E | Example 2 | 3.83mm | 33.0% | 4.28% |
| Gelcoat F | Example 7 | 4.37mm | 29.8% | 4.52% |
| Gelcoat G | Example 8 | 4.37mm | 31.6% | 0.91% |

The results show that the gelcoats of the invention give similar mechanical performance to the comparative example gelcoats when part of a reinforced laminate.

## Claims

1. A thermosetting gel coat resin comprising a polymerisable reaction product of:
(1) an isocyanate component having two or more isocyanate groups; and
(2) ethylenically unsaturated components comprising:
(i) an acrylate component having at least one functional group that is reactive with an isocyanate group and at least one acrylate group; and
(ii) an allyl component having at least one functional group that is reactive with an isocyanate group and at least one allyl group, wherein the reaction product is in the presence of a reactive diluent monomer suitable for reaction therewith to form a thermoset gel coat.

2. A thermosetting gel coat resin according to claim 1 wherein the isocyanate component (1) is an isocyanate terminated molecule obtainable by reaction of an isocyanate (X) having two or more isocyanate groups and an extender molecule (Y) and is of the form X-(Y-X)ₙ, wherein: (a) n is in the range of 1 to 5, or (b) n = 1.

3. A thermosetting gel coat resin according to claim 2 wherein the extender molecule is selected from at least one of the following (a) to (c): (a) the extender molecule has hydroxyl groups for reaction with isocyanate groups,(b) the extender molecule is a diol, and (c) the extender molecule is a diol selected from polyethylene glycol and polypropylene glycol.

4. A thermosetting gel coat resin according to claim 3 wherein the extender molecule is a polyethylene glycol having a molecular weight of less than 1000, preferably less than 500, more preferably less than 400 and even more preferably less than 300.

5. A thermosetting gel coat resin according to any one of the preceding claims wherein the isocyanate component (1) is selected from at least one of the following (a) to (d) :
(a) the isocyanate component (1) is selected from aliphatic alkylene diisocyanates, cycloaliphatic diisocyanates, araliphatic diisocyanates and aromatic diisocyanates,
(b) the isocyanate component (1) is an isocyanate terminated molecule obtainable by reaction of an isocyanate (X) selected from aliphatic alkylene diisocyanates, cycloaliphatic diisocyanates, araliphatic diisocyanates and aromatic diisocyanates and an extender molecule (Y),
(c) a diisocyanate that does not contain an isocyanate group conjugated with an aromatic group and
(d) an isocyanate component selected from cycloaliphatic diisocyanates such as isophorone diisocyanate (IPDI), araliphatic diisocyanates such as tetramethylenexylylene diisocyanate (TMXDI), and alkylene diisocyanates such as hexamethylene diisocyanate (HDI) and trimethylhexamethylene diisocyanate (TMDI).

6. A thermosetting gel coat resin according to any one of claims 2 to 5 wherein: (a) the isocyanate terminated molecule (1) is obtainable by reaction of isocyanate component (X) with the extender molecule (Y) in a mole ratio of about 1.5 to 2.5 moles of isocyanate (X) to 1 extender molecule (Y) or (b) the isocyanate terminated molecule (1) is obtainable by reaction of isocyanate component (X) with the extender molecule (Y) in at least a 2:1 excess based on moles of isocyanate (X) and extender molecule (Y).

7. A thermosetting gel coat resin according to any preceding claim wherein the acrylate component (i) is selected from at least one of the following (a) to (d):
(a) an acrylate component (i) that has a hydroxyl group for reaction with an isocyanate group,
(b) the acrylate component (i) is a hydroxy (C1 to C8) alkyl acrylate, or an ethoxylated, propoxylated or lactone extended version thereof,
(c) the acrylate component (i) is selected from 2-hydroxyethyl acrylate, 2-hydroxypropyl acrylate and 4-hydroxybutyl acrylate, and
(d) the acrylate component (i) includes a di or higher acrylate such as pentaerythritol triacrylate and dipentaerythritol pentaacrylate.

8. A thermosetting gel coat resin according to any preceding claim wherein the allyl component (ii) is selected from at least one of the following (a) to (c):
(a) the allyl component (ii) has a hydroxyl group for reaction with an isocyanate group,
(b) the allyl component includes allylic functionalised alcohols especially allyl alcohol, propoxylated allyl alcohol and trimethylol propane diallyl ether (TMPDE), and
(c) the allyl component (ii) is a di or higher allyl such as trimethylol propane diallyl ether and/or pentaerythritol triallyl ether.

9. A thermosetting gel coat resin according to any one of claims 2 to 8 comprising: (a) a polymerisable reaction product of (1) an isocyanate terminated molecule and (2) ethylenically unsaturated components, wherein the ethylenically unsaturated components (2) are provided in a total excess of at least 3%, preferably at least 5%, most preferably at least about 20% equivalence excess in terms of equivalence of the functional group reactive with the isocyanate group over the isocyanate groups and optionally comprising (b) a polymerisable reaction product of (1) an isocyanate terminated molecule and (2) ethylenically unsaturated components, wherein the acrylate component (i) is present in a sub stoichiometric amount to the isocyanate component (1), and the combined amounts of ethylenically unsaturated components (2) preferably represent a stoichiometric excess of functional groups reactive with the isocyanate group, as compared to the isocyanate component.

10. A thermosetting gel coat resin according to claim 9 wherein the ethylenically unsaturated component (2) comprises an acrylate component (i) and an allyl component (ii) in a molar ratio of at least 1.5:1 in terms of an excess of acrylate component (i) over allyl component (ii) and preferably the ethylenically unsaturated component (2) comprises acrylate component (i) and allyl component (ii) in a molar ratio of from 1.5:1 to 10:1, especially 2:1 to 8:1, more especially 2.1:1 to 7.5:1.

11. A thermosetting gel coat resin according to any preceding claim wherein the ethylenically unsaturated component (2) contains no more than 10wt% of a methacrylate component and preferably is essentially free of methacrylate component.

12. A thermosetting gel coat resin according to any preceding claim,comprising a polymerisable reaction product of (1) and (2) in the presence of reactive diluent monomer having at least one ethylenically unsaturated bond.

13. A gel coat resin composition comprising a thermosetting gel coat resin as claimed in any one of claims 1 to 12, optionally selected from at least one of the following (a) to (g):
(a) the gel coat resin is present in the composition in an amount of about 60 to 90wt%, preferably 70 to 80wt%, based on the total weight of the composition,
(b) the gel coat resin composition further comprises a component of a free radical initiator system,
(c) the gel coat resin composition includes a metal salt and/or an amine as a component of the free radical initiator system,
(d) the gel coat resin composition comprises a peroxide component of a free radical initiator system,
(e) the gel coat resin composition is substantially free of fibrous reinforcement,
(f) the gel coat resin composition further comprises a thixotrope, preferably fumed silica, and
(g) the gel coat resin composition exhibits a thixotropic index of at least 10, when measured at 25°C.

14. An article having a gel coat prepared by curing a gel coat resin as claimed in any one of claims 1 to 12 or a gel coat composition as claimed in claim 13, optionally wherein the article is in the form of a moulded article provided with a gel coat layer and a support layer provided by a cured thermosetting resin, optionally wherein the support layer is in the form of a fibrous reinforced support layer, wherein the thermosetting resin of the support layer which includes a cured thermoset resin is selected from a urethane (meth)acrylate resin, an allylurethane (meth)acrylate resin, an unsaturated polyester resin or a vinyl ester resin.

15. A method of providing a gel coat on a support layer, the method comprising applying a gel coat composition as claimed in claim 13 and free radical initiator to a mould surface, allowing the gel coat composition to at least partially cure, applying an optionally reinforced thermosetting moulding composition to the gel coat layer and curing the moulding composition to provide a support layer for the gel coat.

## Patentansprüche

1. Wärmehärtbares Gelbeschichtungsharz, das Folgendes umfasst:
ein polymerisierbares Reaktionsprodukt von:
(1) einer Isocyanatverbindung mit zwei oder mehreren Isocyanatgruppen; und
(2) ethylenisch ungesättigten Komponenten, die Folgendes umfassen:
(i) eine Acrylatkomponente mit zumindest einer funktionellen Gruppe, die mit einer Isocyanatgruppe reaktionsfähig ist, und zumindest einer Acrylatgruppe; und
(ii) eine Allylkomponente mit zumindest einer funktionellen Gruppe, die mit einer Isocyanatgruppe reaktionsfähig ist, und zumindest einer Allylgruppe,
worin das Reaktionsprodukt in Gegenwart eines Reaktivverdünner-Monomers vorliegt, das zur Reaktion damit zwecks Bildung einer duroplastischen Gelbeschichtung geeignet ist.

2. Wärmehärtbares Gelbeschichtungsharz nach Anspruch 1, worin die Isocyanatkomponente (1) ein Molekül mit Isocyanat-Endgruppen ist, das durch Reaktion zwischen einem Isocyanat (X) mit zwei oder mehreren Isocyanatgruppen und einem Extendermolekül (Y) erhältlich ist und die Form X-(Y-X)ₙ aufweist, worin: (a) n im Bereich von 1 bis 5 liegt oder (b) n = 1 ist.

3. Wärmehärtbares Gelbeschichtungsharz nach Anspruch 2, worin das Extendermolekül aus zumindest einem der folgenden (a) bis (c) ausgewählt ist: (a) das Extendermolekül weist Hydroxylgruppen zur Reaktion mit Isocyanatgruppen auf; (b) das Extendermolekül ist ein Diol, und (c) das Extendermolekül ist ein aus Polyethylenglykol und Polypropylenglykol ausgewähltes Diol.

4. Wärmehärtbares Gelbeschichtungsharz nach Anspruch 3, worin das Extendermolekül ein Polyethylenglykol mit einem Molekulargewicht von weniger als 1000, vorzugsweise weniger als 500, noch bevorzugter weniger als 400 und noch bevorzugter weniger als 300, ist.

5. Wärmehärtbares Gelbeschichtungsharz nach einem der vorangegangenen Ansprüche, worin die Isocyanatkomponente (1) aus zumindest einer der folgenden (a) bis (d) ausgewählt ist:
(a) die Isocyanatkomponente (1) ist aus aliphatischen Alkylendiisocyanaten, cycloaliphatischen Diisocyanaten, araliphatischen Diisocyanaten und aromatischen Diisocyanaten ausgewählt;
(b) die Isocyanatkomponente (1) ist ein Molekül mit Isocyanat-Endgruppen, das das durch Reaktion zwischen einem aus aliphatischen Alkylendiisocyanaten, cycloaliphatischen Diisocyanaten, araliphatischen Diisocyanaten und aromatischen Diisocyanaten ausgewählten Isocyanat (X) und einem Extendermolekül (Y) erhältlich ist;
(c) einem Diisocyanat, das keine mit einer aromatischen Gruppe konjugierte Isocyanatgruppe enthält, und
(d) einer aus cycloaliphatischen Diisocyanaten, wie z.B. Isophorondiisocyanat (IPDI), araliphatischen Diisocyanaten, wie z.B. Tetramethylenxylylendiisocyanat (TMXDI), und Alkyldiisocyanaten, wie z.B. Hexamethylendiisocyanat (HDI) und Trimethylhexamethylendiisocyanat (TMDI), ausgewählte Isocyanatkomponente.

6. Wärmehärtbares Gelbeschichtungsharz nach einem der Ansprüche 2 bis 5, worin: (a) das Molekül mit Isocyanat-Endgruppen (1) durch Umsetzen der Isocyanatkomponente (X) mit dem Extendermolekül (Y) in einem Molverhältnis von etwa 1,5 bis 2,5 Mol Isocyanat (X) pro 1 Extendermolekül (Y) erhältlich ist oder (b) das Molekül mit Isocyanat-Endgruppen (1) durch Umsetzen der Isocyanatkomponente (X) mit dem Extendermolekül (Y) in einem Überschuss von zumindest 2:1, bezogen auf die Mole von Isocyanat (X) und Extendermolekül (Y), erhältlich ist.

7. Wärmehärtbares Gelbeschichtungsharz nach einem der vorangegangenen Ansprüche, worin die Acrylatkomponente (i) aus zumindest einer der folgenden (a) bis (d) ausgewählt ist:
(a) einer Acrylatkomponente (i), die eine Hydroxylgruppe zur Reaktion mit einer Isocyanatgruppe aufweist;
(b) die Acrylatkomponente (i) ist ein Hydroxy-(C₁₋₈)-alkylacrylat oder eine ethoxylierte, propoxylierte oder mittels Lacton verlängerte Version davon;
(c) die Acrylatkomponente (i) ist aus 2-Hydroxyethylacrylat, 2-Hydroxypropylacrylat und 4-Hydroxybutylacrylat ausgewählt; und
(d) die Acrylatkomponente (i) umfasst ein Di- oder höheres Acrylat, wie z.B. Pentaerythrittriacrylat und Dipentaerythritpentaacrylat.

8. Wärmehärtbares Gelbeschichtungsharz nach einem der vorangegangenen Ansprüche, worin die Allylkomponente (ii) aus zumindest einer der folgenden (a) bis (c) ausgewählt ist:
(a) die Allylkomponente (ii) weist eine Hydroxylgruppe zur Reaktion mit einer Isocyanatgruppe auf;
(b) die Allylkomponente umfasst allylisch funktionalisierte Alkohole, insbesondere Allylalkohol, propoxylierten Allylalkohol und Trimethylolpropandiallylether (TMPDE); und
(c) die Allylkomponente (ii) ist ein Di- oder höheres Allyl, wie z.B. Trimethylolpropandiallylether und/oder Pentaerythrittriallylether.

9. Wärmehärtbares Gelbeschichtungsharz nach einem der Ansprüche 2 bis 8, das Folgendes umfasst: (a) ein polymerisierbares Reaktionsprodukt von (1) einem Molekül mit Isocyanat-Endgruppen und (2) ethylenisch ungesättigten Komponenten, worin die ethylenisch ungesättigten Komponenten (2) in einem Gesamtüberschuss von zumindest 3 %, vorzugsweise zumindest 5 %, noch bevorzugter zumindest etwa 20 %, Äquivalenzüberschuss, ausgedrückt als Äquivalenz der mit der Isocyanatgruppe reaktionsfähigen funktionellen Gruppen gegenüber den Isocyanatgruppen, bereitgestellt sind, und das vorzugsweise Folgendes umfasst: (b) ein polymerisierbares Reaktionsprodukt von (1) einem Isocyanat-terminierten Molekül und (2) ethylenisch ungesättigten Komponenten, worin die Acrylatkomponente (1) in einer unterstöchiometrischen Menge gegenüber der Isocyanatkomponente (1) vorliegt und die kombinierte Menge an ethylenisch ungesättigten Komponenten (2) vorzugsweise einen stöchiometrischen Überschuss an mit der Isocyanatgruppe reaktionsfähigen funktionellen Gruppen gegenüber der Isocyanatkomponente darstellt.

10. Wärmehärtbares Gelbeschichtungsharz nach Anspruch 9, worin die ethylenisch ungesättigte Komponente (2) eine Acrylatkomponente (i) und eine Allylkomponente (ii) in einem Molverhältnis von zumindest 1,5:1 im Sinne eines Überschusses der Acrylatkomponente (i) gegenüber der Allylkomponente (ii) umfasst und vorzugsweise die ethylenisch ungesättigte Komponente (2) die Acrylatkomponente (i) und die Allylkomponente (ii) in einem Molverhältnis von 1,5:1 bis 10:1, insbesondere 2:1 bis 8:1, noch spezieller 2,1:1 bis 7,5:1, umfasst.

11. Wärmehärtbares Gelbeschichtungsharz nach einem der vorangegangenen Ansprüche, worin die ethylenisch ungesättigte Komponente (2) nicht mehr als 10 Gew.-% einer Methacrylatkomponente enthält und vorzugsweise im Wesentlichen frei von der Methacrylatkomponente ist.

12. Wärmehärtbares Gelbeschichtungsharz nach einem der vorangegangenen Ansprüche, das ein polymerisierbares Reaktionsprodukt von (1) und (2) in Gegenwart eines Reaktivverdünner-Monomers mit zumindest einer ethylenisch ungesättigten Bindung umfasst.

13. Gelbeschichtungsharz-Zusammensetzung, die ein wärmehärtbares Gelbeschichtungsharz nach einem der Ansprüche 1 bis 12 umfasst, gegebenenfalls ausgewählt aus zumindest einem der folgenden (a) bis (g):
(a) das Gelbeschichtungsharz liegt in der Zusammensetzung in einer Menge von etwa 60 bis 90 Gew.-%, vorzugsweise 70 bis 80 Gew.-%, bezogen auf das Gesamtgewicht der Zusammensetzung, vor;
(b) die Gelbeschichtungsharz-Zusammensetzung umfasst weiters eine Komponente eines radikalischen Initiatorsystems;
(c) die Gelbeschichtungsharz-Zusammensetzung umfasst ein Metallsalz und/ oder ein Amin als Komponente(n) des radikalischen Initiatorsystems;
(d) die Gelbeschichtungsharz-Zusammensetzung umfasst eine Peroxidkomponente eines radikalischen Initiatorsystems;
(e) die Gelbeschichtungsharz-Zusammensetzung ist im Wesentlichen frei von Faserverstärkung;
(f) die Gelbeschichtungsharz-Zusammensetzung umfasst weiters ein Thixotrop, vorzugsweise pyrogene Kieselsäure; und
(g) die Gelbeschichtungsharz-Zusammensetzung weist, gemessen bei 25 °C, einen Thixotropieindex von zumindest 10 auf.

14. Gegenstand mit einer Gelbeschichtung, hergestellt durch das Härten eines Gelbeschichtungsharzes nach einem der Ansprüche 1 bis 12 oder einer Gelbeschichtungszusammensetzung nach Anspruch 13, worin gegebenenfalls der Gegenstand in Form eines Formstücks vorliegt, das mit einer Gelbeschichtungsschicht und einer von einem gehärteten wärmehärtbaren Harz bereitgestellten Trägerschicht ausgestattet ist, worin gegebenenfalls die Trägerschicht in Form einer faserverstärkten Trägerschicht vorliegt, worin das wärmehärtbare Harz der Trägerschicht, die ein gehärtetes duroplastisches Harz umfasst, aus einem Urethan(meth)acrylatharz, einem Allylurethan(meth)acrylatharz, einem ungesättigten Polyesterharz und einem Vinylesterharz ausgewählt ist.

15. Verfahren zur Ausstattung einer Trägerschicht mit einer Gelbeschichtung, wobei das Verfahren das Aufbringen einer Gelbeschichtungszusammensetzung nach Anspruch 13 und eines radikalischen Initiators auf eine Formoberfläche, das zumindest teilweise Härtenlassen der Gelbeschichtungszusammensetzung, das Aufbringen einer gegebenenfalls verstärkten wärmehärtbaren Formzusammensetzung auf die Gelbeschichtungsschicht und das Härten der Formzusammensetzung, um eine Trägerschicht für die Gelbeschichtung bereitzustellen, umfasst.

## Revendications

1. Résine d'enduit gélifié thermodurcissable comprenant
un produit de réaction polymérisable de :
(1) un composant isocyanate ayant deux ou plusieurs groupes isocyanates ; et
(2) des composants insaturés du point de vue éthylénique comprenant :
(i) un composant acrylate ayant au moins un groupe fonctionnel qui réagit avec un groupe isocyanate et au moins un groupe acrylate ; et
(ii) un composant allyle ayant au moins un groupe fonctionnel qui réagit avec un groupe isocyanate et au moins un groupe allyle, où le produit de réaction, en présence d'un monomère de diluant réactif, est apte à réagir avec celui-ci pour former un enduit gélifié thermodurci.

2. Résine d'enduit gélifié thermodurcissable selon la revendication 1, où le composant isocyanate (1) est une molécule terminée par l'isocyanate pouvant être obtenue par la réaction d'un isocyanate (X) ayant deux ou plusieurs groupes isocyanates et une molécule de développement (Y) et est de la forme X-(Y-X)ₙ, où : (a) n est dans la plage de 1 à 5, ou (b) n = 1.

3. Résine d'enduit gélifié thermodurcissable selon la revendication 2, où la molécule de développement est sélectionnée parmi au moins un des suivants (a) à (c) : (a) la molécule de développement possède des groupes hydroxyles pour la réaction avec des groupes isocyanates, (b) la molécule de développement est un diol, et (c) la molécule de développement est un diol sélectionné parmi le polyéthylène glycol et le polypropylène glycol.

4. Résine d'enduit gélifié thermodurcissable selon la revendication 3, où la molécule de développement est un polyéthylène glycol d'un poids moléculaire inférieur à 1000, de préférence inférieur à 500, selon une préférence plus grande inférieur à 400 et selon une préférence encore plus grande inférieur à 300.

5. Résine d'enduit gélifié thermodurcissable selon l'une quelconque des revendications précédentes, où le composant isocyanate (1) est sélectionné parmi au moins un des suivants (a) à (d) :
(a) le composant isocyanate (1) est sélectionné parmi des alkylène diisocyanates aliphatiques, des diisocyanates cyclo-aliphatiques, des diisocyanates araliphatiques et des diisocyanates aromatiques,
(b) le composant isocyanate (1) est une molécule terminée par l'isocyanate pouvant être obtenue par la réaction d'un isocyanate (X) sélectionné parmi des alkylène diisocyanates aliphatiques, des diisocyanates cycloaliphatiques, des diisocyanates araliphatiques et des diisocyanates aromatiques et d'une molécule de développement (Y),
(c) un diisocyanate qui ne contient pas de groupe isocyanate conjugué avec un groupe aromatique et
(d) un composant isocyanate sélectionné parmi des diisocyanates cycloaliphatiques comme le isophorone diisocyanate (IPDI), des diisocyanates araliphatiques comme le tétraméthylènexylylène diisocyanate (TMXDI) et des alkylène diisocyanates comme le hexaméthylène diisocyanate (HDI) et le triméthylhexaméthylène diisocyanate (TMDI).

6. Résine d'enduit gélifié thermodurcissable selon l'une quelconque des revendications 2 à 5, où : (a) la molécule terminée par l'isocyanate (1) peut être obtenue par la réaction du composant isocyanate (X) avec la molécule de développement (Y) en un rapport molaire d'environ 1,5 à 2,5 moles d'isocyanate (X) à 1 molécule de développement (Y), ou (b) la molécule terminée par isocyanate (1) peut être obtenue par la réaction du composant isocyanate (X) avec la molécule de développement (Y) selon au moins un excès de 2 :1 basé sur les moles de l'isocyanate (X) et la molécule de développement (Y).

7. Résine d'enduit gélifié thermodurcissable selon l'une quelconque des revendications précédentes, où le composant acrylate (i) est sélectionné parmi au moins un des suivants (a) à (d) :
(a) un composant acrylate (i) qui a un groupe hydroxyle pour la réaction avec un groupe isocyanate,
(b) le composant acrylate (i) est un hydroxy (C1 à C8) alkyle acrylate, ou une version étendue éthoxylée, propoxylée ou lactone de celui-ci,
(c) le composant acrylate (i) est sélectionné parmi 2-hydroxyéthyle acrylate, 2-hydroxypropyle acrylate et 4-hydroxybutyle acrylate, et
(d) le composant acrylate (i) comprend un di-acrylate ou acrylate plus élevé comme le pentaérythritol triacrylate et le dipentaerythritol pentaacrylate.

8. Résine d'enduit gélifié thermodurcissable selon l'une quelconque des revendications précédentes, où le composant allyle (ii) est sélectionné parmi au moins un des suivants (a) à (c) :
(a) le composant allyle (ii) a un groupe hydroxyle pour la réaction avec un groupe isocyanate,
(b) le composant allyle inclut des alcools allyliques fonctionnalisés, en particulier l'alcool d'allyle, l'alcool d'allyle propoxylée et le triméthylol propane diallyle éther (TMPDE), et
(c) le composant allyle (ii) est un di-allyle ou allyle plus élevé comme le triméthylol propane diallyle éther et/ou le pentaerythritol triallyle éther.

9. Résine d'enduit gélifié thermodurcissable selon l'une quelconque des revendications 2 à 8 comprenant : (a) un produit de réaction polymérisable de (1) une molécule terminée par isocyanate et (2) des composants éthyléniquement insaturés, où les composants éthyléniquement insaturés (2) sont réalisés en un excès total d'au moins 3%, de préférence d'au moins 5%, selon la plus grande préférence d'au moins environ 20% d'excès d'équivalence en termes d'équivalence du groupe fonctionnel réagissant avec le groupe isocyanate sur les groupes isocyanates et comprenant en option (b) un produit de réaction polymérisable de (1) une molécule terminée par isocyanate et (2) des composants éthyléniquement insaturés, où le composant acrylate (i) est présent en une quantité sub-stoechiométrique au composant isocyanate (1), et les quantités combinées de composants éthyléniquement insaturés (2) représentent de préférence un excès stoechiométrique de groupes fonctionnels réagissant avec le groupe isocyanate, en comparaison avec le composant isocyanate.

10. Résine d'enduit gélifié thermodurcissable selon la revendication 9, où le composant éthyléniquement insaturé (2) comprend un composant acrylate (i) et un composant allyle (ii) en un rapport molaire d'au moins 1,5 :1 en termes d'un excès du composant acrylate (i) sur le composant allyle (ii) et de préférence le composant éthyléniquement insaturé (2) comprend le composant acrylate (i) et le composant allyle (ii) en un rapport molaire de 1,5 :1 à 10 :1, en particulier de 2 :1 à 8 :1, plus particulièrement de 2,1 :1 à 7,5 :1.

11. Résine d'enduit gélifié thermodurcissable selon l'une quelconque des revendications précédentes, où le composant éthyléniquement insaturé (2) ne contient pas plus que 10% en poids d'un composant méthacrylate et est de préférence essentiellement exempt du composant méthacrylate.

12. Résine d'enduit gélifié thermodurcissable selon l'une quelconque des revendications précédentes, comprenant un produit de réaction polymérisable de (1) et (2) en présence d'un monomère de diluant réactif ayant au moins une liaison éthyléniquement insaturée.

13. Composition de résine d'enduit gélifié comprenant une résine d'enduit gélifié thermodurcissable selon l'une quelconque des revendications 1 à 12, en option sélectionnée parmi au moins un des suivants (a) à (g) :
(a) la résine d'enduit gélifié est présente dans la composition en une quantité d'environ 60 à 90% en poids, de préférence 70 à 80 % en poids, basé sur le poids total de la composition,
(b) la composition de résine d'enduit gélifié comprend en outre un composant d'un système inducteur radicalaire,
(c) la composition de résine d'enduit gélifié comprend un sel métallique et/ou une amine comme composant du système inducteur radicalaire,
(d) la composition de résine d'enduit gélifié comprend un composant peroxyde d'un système inducteur radicalaire,
(e) la composition de résine d'enduit gélifié est sensiblement exempte d'un renforcement fibreux,
(f) la composition de résine d'enduit gélifié comprend en outre un thixotrope, de préférence de la silice fumée, et
(g) la composition de résine d'enduit gélifié présente un indice thixotropique d'au moins 10, mesuré à 25°C.

14. Article ayant un enduit gélifié préparé en durcissant une résine d'enduit gélifié selon l'une quelconque des revendications 1 à 12 ou une composition d'enduit gélifié selon la revendication 13, en option où l'article est sous la forme d'un article moulé pourvu d'une couche d'enduit gélifié et d'une couche de support réalisée par une résine thermodurcissable durcie, en option où la couche de support est sous la forme d'une couche de support renforcée par des fibres, où la résine thermodurcissable de la couche de support qui comprend une résine thermodurcie durcie est sélectionnée parmi une résine (méth)acrylate, une résine allyluréthane (méth)acrylate, une résine de polyester insaturée ou une résine de vinyle ester.

15. Procédé de préparation d'un enduit gélifié sur une couche de support, le procédé comprend l'application d'une composition d'enduit gélifié selon la revendication 13 et d'un inducteur radicalaire à une surface de moule, permettre à la composition d'enduit gélifié de durcir au moins partiellement, appliquer une composition de moulage thermodurcissable optionnellement renforcée à la couche d'enduit gélifié et durcir la composition de moulage pour réaliser une couche de support pour l'enduit gélifié.
